# NOUVEAU FASCICULE DE BREVET EUROPEEN

(11) **EP 2 496 649 B2**
(45) Date de publication et mention de la décision concernant l'opposition: **28.10.2020**
(45) Mention de la délivrance du brevet: 19.03.2014
(21) Numéro de dépôt: 10792960.6
(22) Date de dépôt: 03.11.2010
(51) Int. Cl.: C09D 5/02, C09D 7/12

(54) **COMPOSITION FILMOGENE RENFERMANT UN AGENT APTE A PIEGER LE FORMALDEHYDE**
FILMBILDENDE ZUSAMMENSETZUNG MIT EINEM STOFF ZUM EINFANGEN VON FORMALDEHYD
FILM-FORMING COMPOSITION CONTAINING AN AGENT CAPABLE OF TRAPPING FORMALDEHYDE

(30) Priorité: 03.11.2009 FR 0905272
(43) Date de publication de la demande: 12.09.2012
(73) Titulaire: Saint-Gobain Adfors, 73000 Chambéry (FR)
(72) Inventeur: BLANCHARD, Benjamin, F-95150 Taverny (FR); CHUDA, Katarzyna, 94800 Villejuifuif (FR)
(74) Mandataire: Saint-Gobain Recherche
(86) Numéro de dépôt international: PCT/FR2010/052352
(87) Numéro de publication internationale: WO 2011/055073

(56) Documents cités:
- WO-A1-98/27147
- FR-A- 1 483 515
- US-A- 5 446 195
- US-A- 5 969 046
- US-A1- 2005 226 761
- DATABASE WPI Week 200036 Thomson Scientific, London, GB; AN 2000-415911 XP002590107, & JP 2000 144016 A (KANSAI PAINT CO LTD) 26 mai 2000 (2000-05-26)
- DATABASE WPI Week 200150 Thomson Scientific, London, GB; AN 2001-459717 XP002590109, & JP 2001 089217 A (ONODA KK) 3 avril 2001 (2001-04-03)
- Römp Chemie Lexikon, 9. Auflage, 1992, p.4743-4744

## Description

L'invention se rapporte à une composition filmogène destinée à être appliquée sur une surface intérieure d'un bâtiment, qui renferme un agent apte à piéger le formaldéhyde.

Des matériaux très divers sont utilisés pour la construction et l'aménagement intérieurs des bâtiments d'habitation et de bureaux. Certains de ces matériaux tels que les isolants acoustiques et/ou thermiques, les panneaux de bois, le mobilier et les éléments de décoration utilisent des adhésifs, des peintures et des vernis mettant en oeuvre du formaldéhyde.

La proportion de formaldéhyde libre dans ces matériaux est déjà très faible. Néanmoins, la réglementation en matière de protection contre les émissions indésirables de produits pouvant présenter un risque pour la santé des individus devient plus stricte et impose de réduire encore la quantité de formaldéhyde libre ou susceptible d'être émis par les matériaux au cours du temps.

Des moyens pour réduire la quantité de formaldéhyde à l'intérieur de bâtiments sont connus.

Il a été proposé d'inclure des particules d'oxyde de titane photocatalytique dans une peinture (CN-A-1912037, CN-C-1290948 et CN-C1303168) ou un matériau en plâtre (US-A-2005/0226761), un papier ou un matériau textile, plastique ou en bois (EP-A-1 437 397).

Il est aussi connu d'utiliser un hydrazide dans un matériau de construction à base de plâtre ou de ciment (US-A-2004/0101695 et JP-A-2004115340), ou dans une peinture (JP-A-2000095980).

Il a encore été proposé d'ajouter de la poudre de coquille d'huitre calcinée dans une peinture ou un papier, notamment un papier peint (JP-A-2005230729.

On connaît encore des peintures à l'eau qui contiennent, en tant qu'agent apte à réduire la quantité de formaldéhyde, un acide aminé ou un sel de cet acide, un peptide ou un sulfite (CN-A-101016426).

La présente invention a pour but de réduire la quantité de formaldéhyde présent à l'intérieur des bâtiments.

Pour atteindre ce but, la présente invention propose une composition filmogène qui contient un agent apte à piéger le formaldéhyde selon la présente revendication 1.

La présente invention a également pour objet l'utilisation d'une composition filmogène selon la revendication 5 et un procédé pour réduire la quantité de formaldéhyde dans l'air à l'intérieur d'un bâtiment selon la revendication 6.

Par «composition filmogène » on entend une composition apte à former un film ou un feuil par départ du milieu de dispersion contenu initialement dans ladite composition. Le film obtenu est adhérent au support sur lequel la composition filmogène a été appliquée.

En particulier, la composition filmogène selon l'invention est une peinture ou un vernis.

Par « agent apte à réagir avec le formaldéhyde » on entend un composé organique qui se lie au formaldéhyde par liaison covalente.

L'agent apte à réagir avec le formaldéhyde conforme à l'invention est choisi parmi
les composés à méthylène(s) actif(s) de formules (I) suivante : 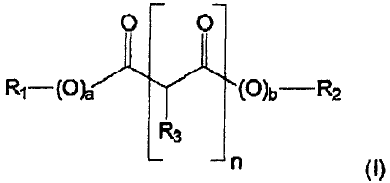 dans laquelle :
- R₁ et R₂, identiques ou différents, représentent un atome d'hydrogène, un radical alkyle en C₁-C₂₀, de préférence C₁-C₆, un radical amino ou un radical de formule 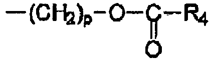 dans laquelle R₄ représente un radical 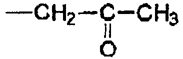 ou 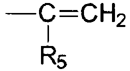
   où R₅ = H ou -CH₃
      et p est un nombre entier variant de 1 à 6
- R₃ représente un atome d'hydrogène, un radical alkyle en C₁-C₁₀, un radical phényle ou un atome d'halogène
- a est égal à 0 ou 1
- b est égal à 0 ou 1
- n est égal à 1 ou 2

Les composés de formule (I) préférés sont :
- la 2,4-pentanedione :
   R₁ = -CH₃ ; R₂ = -CH₃ ; R₃ H ; a = 0 ; b = 0 ; n = 1
- la 2,4-hexanedione :
   R₁ = -CH₂-CH₃ ; R₂ = -CH₃ ; R₃ H ; a = 0 ; b = 0 ; n = 1
- la 3,5-heptanedione
   R₁ = -CH₂-CH₃ ; R₂ = -CH₂-CH₃ ; R₃ H ; a = 0 ; b=0 ; n 1
- la 2,4-octanedione :
   R₁ = -CH₃ ; R₂ = -(CH₂)₃-CH₃ ; R₃ H ; a = 0 ; b = 0 ; n = 1
- l'acétoacétamide :
   R₁=-CH₃ ; R₂ = -NH₂ ; R₃ = H ; a = 0 ; b = 0 ; n = 1
- l'acide acétoacétique :
   R₁ = -CH₃ ; R₂ = H ; R₃ H ; a 0 ; b 1 ; n = 1
- le méthylacétoacétate :
   R₁ = -CH₃ ; R₂= -CH₃ ; R₃ H ; a 0; b 1 ; n = 1
- l'éthylacétoacétate :
   R₁ = -CH₃ ; R₂ = -CH₂-CH₃ ;R₃ H ; a = 0 ; b = 1 ; n = 1
- le n-propylacétoacétate :
   R₁ = -CH₃ ; R₂ = -(CH₂)₂-CH₃ ; R₃ = H ; a = 0 ; b = 1 ; n = 1
- l'iso-propylacétoacétate :
   R₁ = -CH₃ ; R₂ = -CH(CH₃)₂ ; R₃ = H ; a = 0 ; b = 1 ; n = 1
- l'iso-butylacétoacétate :
   R₁ = -CH₃ ; R₂ = -CH₂-CH(CH₃)₂ ; R₃ = H ; a = 0 ; b = 1 ; n = 1
- le t-butylacétoacétate :
   R₁ = -CH₃ ; R₂ = -C(CH₃)₃ ; R₃ = H ; a = 0 ; b = 1 ; n = 1
- le n-hexylacétoacétate :
   R₁ = -CH₃ ; R₂ = -(CH₂)₆-CH₃ ; R₃ = H ; a = 0 ; b = 1 ; n = 1
- le malonamide :
   R₁ = -NH₂; R₂ = -NH₂ ; R₃ = H ; a = 0 ; b = 0 ; n = 1
- l'acide malonique :
   R₁ = H ; R₂ = H ; R₃ = H ; a = 1 ; b = 1 ; n = 1
- le dimethylmalonate :
   R₁ = -CH₃ ; R₂ = -CH₃ ; R₃ = H ; a = 1 ; b = 1 ; n = 1
- le diéthylmalonate :
   R₁ = -CH₂-CH₃ ; R₂ = -CH₂-CH₃ ; R₃ = H ; a = 1 ; b = 1 ; n = 1
- le di-n-propylmalonate :
   R₁ = -(CH₂)₂-CH₃ ; R₂ = -(CH₂)₂-CH₃ ; R₃ = H ; a = 1 ; b = 1 ; n = 1
- le di-iso-propylmalonate :
   R₁ = -CH(CH₃)₂ ; R₂ = -CH(CH₃)₂ ; R₃ = H ; a = 1 ; b = 1 ; n = 1
- le di-n-butylmalonate :
   R₁ = -(CH₂)₃-CH₃ ; R₂ = -(CH₂)₃-CH₃ ; R₃ = H ; a = 1 ; b = 1 ; n = 1
- l'acide acétonedicarboxylique :
   R₁ = H; R₂ = H ; R₃ = H ; a = 1 ; b = 1 ; n = 2
- le diméthylacétonedicarboxylate :
   R₁ = -CH₃ ; R₂ = -CH₃ ; R₃ = H ; a = 1 ; b = 1 ; n = 2
- le 1,4-butanedioldiacétate
   R₁ = -CH₃ ; R₂ = -(CH₂)₄-O-CO-CH₂-CO-CH₃ ; R₃ = H ; a = 0 ; b = 1 ; n = 1
- le 1,6-hexanedioldiacétate
   R₁ = -CH₃ ; R₂ = -(CH₂)₆-O-CO-CH₂-CO-CH₃ ; R₃ = H ; a = 0 ; b = 1 ; n =
- le méthacryloxyéthylacétoacétate
   R₁ = -CH₃ ; R₂ = -(CH₂)₂-O-CO-C(CH₃)=CH₂ ; R₃ = H ; a = 0 ; b = 1 ; n = 1.

La quantité d'agent apte à piéger le formaldéhyde à utiliser peut varier dans une large mesure selon le type de composition filmogène utilisée et l'utilisation souhaitée. En général, l'agent apte à piéger le formaldéhyde représente 0,05 à 35 % en poids de la matière sèche de la composition filmogène, de préférence de 1 à 20 %, et mieux encore de 4 à 10 %.

La composition filmogène conforme à l'invention est une composition fluide, liquide ou ayant une consistance légèrement pâteuse, qui peut s'étaler en couche mince sur un matériau pour former après séchage (durcissement) un revêtement mince (film ou feuil) adhérent et résistant ayant un rôle protecteur et/ou décoratif. La composition filmogène peut être utilisée notamment comme un apprêt ou une peinture.

De manière générale, la composition filmogène comprend un milieu de dispersion, un liant, des pigments, des charges et des additifs.

Le milieu de dispersion joue le rôle de solvant ou de dispersant inerte des constituants précités et permet en outre d'ajuster la viscosité et la rhéologie de la composition filmogène afin d'assurer une application aisée sur le matériau à revêtir.

Le milieu de dispersion peut être l'eau ou un solvant organique.

L'eau représente généralement 30 à 95 % du poids total de la composition filmogène.

Le solvant organique peut être choisi parmi les hydrocarbures, par exemple le white-spirit, l'essence de térébenthine, le monochlorobenzène et le 1,2-dichlorobenzène, les alcools, par exemple l'alcool éthylique, isopropylique, n-butylique et éthyl-2-hexylique, les éthers de glycol, par exemple le butylglycol, les alkyldiglycols, l'acétate de butylglycol et les éthers de propylèneglycol, les esters, par exemple l'acétate d'éthyle, d'isopropyle, d'amyle et de butylglycol, et les cétones, par exemple la méthyéthylcétone, le méthylbutylcétone, la méthyisobutylcétone, l'isophorone et la diacétone-alcool.

Le milieu de dispersion peut aussi être constitué d'un mélange d'eau et d'une faible proportion d'au moins un des solvants organiques précités qui a pour fonction d'augmenter la solubilisation du liant et joue ainsi le rôle de co-solvant. La proportion de co-solvant représente généralement au plus 5 % du poids total de la composition filmogène.

Le liant assure le lien entre tous les constituants et permet que la composition filmogène adhère au matériau sur lequel elle est appliquée.

Le liant (aussi dénommé « résine ») peut être d'origine naturelle, par exemple une huile siccative (ester de glycérol et d'acide(s) gras), une gomme ou une résine naturelle (damar, copal, gomme laque ou colophane), ou d'origine synthétique, par exemple un dérivé du caoutchouc (caoutchouc cyclisé ou chloré), un dérivé de la cellulose (nitrocellulose, acétate, propionate ou acétobutyrate de cellulose), une résine vinylique (polyacétate de vinyle, copolymère de chlorure de vinyle, copolymère de propionate de vinyle), une résine alkyde (ester de polyalcool et de diacide(s) phtalique(s)), une résine acrylique (poly(méth)acrylate de méthyle ou d'éthyle), un polyester saturé ou insaturé, un polyepoxyde (obtenu par réaction d'épichlorhydrine et de bisphénol A et/ou F), un aminoplaste (résine urée-formol ou mélamine-formol), une résine phénolique (phénol-formol), une résine polyuréthane (mono- ou bicomposant) ou une résine modifiée silicone.

S'agissant de la composition filmogène selon la revendication 1, le liant est une huile siccative choisie parmi les esters de glycérol et d'acide(s) gras, une gomme ou une résine naturelle choisie parmi damar, copal, gomme laque et colophane, un dérivé du caoutchouc choisi parmi le caoutchouc cyclisé et le caoutchouc chloré, un dérivé de la cellulose choisi parmi la nitrocellulose, l'acétate de cellulose, le proprionate de cellulose et l'acétobutyrate de cellulose, une résine vinylique choisie parmi polyacétate de vinyle, copolymère de chlorure de vinyle et copolymère de propionate de vinyle, une résine alkyde choisie parmi les esters de polyalcool et de diacide(s) phtalique(s), une résine acrylique choisie parmi le poly(méth)acrylate de méthyle et le poly(méth)acrylate d'éthyle, un polyester saturé ou insaturé, un polyepoxyde obtenu par réaction d'épichlorhydrine et de bisphénol A et/ou F, une résine polyuréthane mono-composant ou bi-composant, ou une résine modifiée silicone.

La proportion de liant représente généralement 5 à 65 % en poids de la matière sèche de la composition filmogène.

Les pigments confèrent opacité et couleur à la composition filmogène et contribuent en outre à améliorer les propriétés physiques du film, notamment sa dureté, son imperméabilité ou sa résistance à la corrosion. Les pigments sont des solides pulvérulents, de granulométrie très fine (généralement inférieure à 1 µm), insolubles dans le milieu de dispersion.

Les pigments peuvent être minéraux, par exemple des oxydes métalliques, métalloïdes et/ou d'alcalins (titane, zinc, chrome, antimoine, nickel, plomb, potassium, molybdène) et des sulfures métalliques, notamment de zinc et/ou de cadmium.

Les pigments peuvent également être organiques, par exemple des dérivés azoïques, des dérivés de la phtalocyanine, d'anthraquinone, de pérylène ou de thioindigo, des pigments isoindolines ou isoindolinone, des pigments de quinacridone, de dioxazine ou à base de dicétopyrrolopyrrole, et le noir de carbone.

Les pigments peuvent encore être des pigments à effet, par exemple des pigments d'aluminium pour la réalisation de peintures « métallisées », ou des nacres, notamment à base de micas enrobés de couches minérales (dioxyde de titane ou oxyde de fer) ou organiques (phtalocyanine).

Les charges participent à l'amélioration des propriétés mécaniques, chimiques et rhéologiques. Ce sont des solides pulvérulents de granulométrie supérieure à celle des pigments (supérieure à 1 µm), essentiellement minéraux, de couleur blanche, insolubles dans le milieu de dispersion et ne présentant pas ou peu de pouvoir opacifiant.

Les charges sont par exemple le carbonate de calcium, le sulfate de calcium, le sulfate de barium, le kaolin, le talc, le silicate de calcium et les silices (quartz, silice amorphe et diatomées).

Les pigments et les charges constituent la charge solide de la composition filmogène. La quantité de pigments et de charges représente généralement 10 à 95 % en poids de la matière sèche de la composition filmogène, de préférence 35 à 95 % en poids de la matière sèche.

Les additifs sont des produits auxiliaires présents dans la composition filmogène en faible quantité, généralement 0,3 à 5 % en poids de la matière sèche de la composition filmogène, de préférence 1 à 3 %.

Ces additifs sont par exemple des agents rhéologiques qui aident à l'application de la composition filmogène avec une épaisseur importante et assurent la stabilité au stockage (bentonite, huile de ricin hydrogénée, résine de polyamide) ; des agents dispersants et des agents mouillants des pigments et des charges (lécithine de soja, polyacrylate, silicones) ; des agents anti-bulles (polyacrylate, silicones) ; des agents anti-peaux (oximes, par exemple méthyléthyl-cétoxime et cyclohexanoximes) ; des agents d'étalement (éthers et esters de glycols, huiles silicones, dérivés fluorés) ; des agents de matité (silicates, silice, cires de polyéthylène) ; des plastifiants (hydrocarbures chlorés ou non, polyéthers vinyliques) ; des lubrifiants (stéarate de calcium et polyols) ;des catalyseurs (dibutyldilaurate d'étain) et siccatifs (naphténate et octanoate de plomb ou de cobalt) ; des agents de conservation (biocides) ; des agents anti-rayure ; des agents anti-salissure ; des agents ignifuges ; des agents anti-UV, des agents absorbeurs d'humidité et des agents anti-mousse.

Comme indiqué précédemment, la composition filmogène est de préférence une peinture ou un vernis, avantageusement une peinture en phase aqueuse (ou « peinture à l'eau »).

La composition filmogène conforme à l'invention peut être préparée facilement par les moyens connus de l'homme du métier, par exemple en incorporant l'agent apte à piéger le formaldéhyde lors de la préparation de la composition filmogène, conjointement avec le liant, les pigments, les charges et/ou les additifs, ou plus simplement en ajoutant ledit agent dans une composition filmogène classique. Ce dernier mode de préparation est préféré. Dans ce cas, l'ajout de l'agent apte à piéger le formaldéhyde se fait de préférence sous agitation de manière à obtenir un mélange homogène.

La composition filmogène selon l'invention est appliquée sur le support désiré dans les mêmes conditions qu'une composition filmogène classique ne contenant pas d'agent apte à piéger le formaldéhyde, par exemple par les techniques d'enduction, de « casting », de pulvérisation, de trempage ou d'immersion.

Le matériau sur lequel peut être appliquée la composition filmogène selon l'invention dépend essentiellement de la nature du milieu de dispersion (eau ou solvant organique). On peut citer le bois, le plâtre, le béton, le ciment, le bois, le métal, les revêtements muraux, notamment les voiles et les toiles à peindre à base de fibres de verre. De manière particulièrement avantageuse, la composition filmogène est une peinture à l'eau qui est appliquée sur un matériau, notamment une toile à peindre constituée de fibres de verre, qui renferme déjà un agent apte à piéger le formaldéhyde, ce qui permet d'abaisser encore le niveau de formaldéhyde à l'intérieur des bâtiments.

Les exemples qui suivent permettent d'illustrer l'invention sans toutefois la limiter

### EXEMPLE 1

Dans un récipient contenant 1000 g d'une composition filmogène maintenue sous agitation, on ajoute 40 g d'acétoacétamide.

La composition filmogène est une peinture acrylique contenant de l'eau, un liant, des pigments et des adjuvants (Référence Evolutex® commercialisée par Sigma Coating ; teneur en matière sèche : 58 %).

On applique la composition filmogène ainsi obtenue à l'aide d'un rouleau sur une toile à peindre et on laisse sécher. La toile peinte renferme 217,5 g/m² de peinture et 14 g/m² d'acétoacétamide.

Cette toile est soumise aux tests d'absorption et de désorption de formaldéhyde dans les conditions suivantes.

Un échantillon de la toile peinte est placé dans un dispositif conforme à la norme ISO 16000-9, modifié en ce que le taux d'humidité relative est égal à 50 % dans la chambre de test contenant l'échantillon à analyser et dans la chambre de référence ne contenant aucun échantillon de la toile peinte.
a) dans un premier temps, la chambre test et la chambre de référence sont alimentées en continu avec un flux d'air contenant environ 140 µg/m³ de formaldéhyde pendant 4 jours. On mesure la quantité de formaldéhyde dans l'air sortant des chambres de test et de référence à différentes échéances et on calcule le pourcentage de formaldéhyde adsorbé par la toile peinte.
b) dans un deuxième temps, on alimente la chambre de test et la chambre de référence avec de l'air ne contenant pas de formaldéhyde pendant 48 heures et on mesure la quantité de formaldéhyde présent dans l'air à la sortie desdites chambres à différentes échéances.

Le formaldéhyde est mesuré par chromatographie en phase liquide (HPLC) dans les conditions de la norme ISO 16000-3.

Les résultats sont donnés dans le tableau 1 suivant (le pourcentage de formaldéhyde adsorbé est indiqué entre parenthèses).

**Tableau 1**

| | Exemple 1 | Référence |
|---|---|---|
| a) formaldehyde adsorbé (µg/m³) | | |
| - après 8 h | 68 (48 %) | 130 |
| - après 48 h | 60 (50 %) | 120 |
| - après 72 h | 64 (51 %) | 130 |
| - après 96 h | 79 (44 %) | 140 |

| b) formaldéhyde émis (µg/m³) | | |
|---|---|---|
| - après 24 h | 10 | 16 |
| - après 48 h | 11 | 13 |

On constate que la toile peinte de l'exemple 1 selon l'invention permet de piéger une part importante du formaldéhyde présent dans l'air (environ 50 % sur la durée du test). La proportion de formaldéhyde piégé est constante pendant la durée du test.

Le niveau d'émission du formaldéhyde la toile peinte de l'exemple 1 dans l'étape b) est similaire à celui de la référence.

### EXEMPLE 2

On procède dans les conditions de l'exemple 1 modifié en ce que la composition filmogène est appliquée sur une toile à peindre contenant 5 g/m² d'acétoacétamide. La toile peinte renferme 217,5 g/m² de peinture et 19 g/m² d'acétoacétam ide.

Les résultats sont donnés dans le tableau 2 suivant (le pourcentage de formaldéhyde adsorbé est indiqué entre parenthèses).

**Tableau 2**

| | Exemple 1 | Référence |
|---|---|---|
| a) formaldehyde adsorbé (µg/m³) | | |
| - après 8 h | 23 (72 %) | 81 |
| - après 48 h | 17 (80 %) | 85 |
| - après 72 h | 24 (70 %) | 79 |
| - après 96 h | 24 (75 %) | 97 |

| b) formaldéhyde émis (µg/m³) | | |
|---|---|---|
| - après 24 h | < 5 | < 5 |
| - après 48 h | < 5 | 5 |

La part de formaldéhyde piégé dans l'exemple 2 est plus élevée (environ 75 % sur la durée du test) que dans l'exemple 1 (environ 50 %). La proportion de formaldéhyde piégé varie peu au cours de l'étape a).

Le niveau d'émission du formaldéhyde la toile peinte de l'exemple 2 dans l'étape b) est similaire à celui de la référence.

## Revendications

1. Composition filmogène comprenant un milieu de dispersion, un liant, des pigments, des charges et des additifs, **caractérisée en ce qu'**elle renferme un agent apte à piéger le formaldéhyde choisi parmi les composés à méthylène(s) actif(s), de formule (I) suivante : 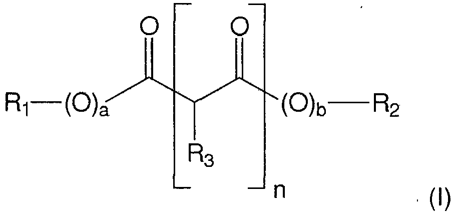 dans laquelle :
- R₁ et R₂, identiques ou différents, représentent un atome d'hydrogène, un radical alkyle en C₁-C₂₀, de préférence C₁-C₆, un radical amino ou un radical de formule 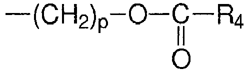 dans laquelle R₄ représente un radical 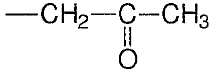 ou 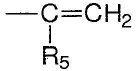 où R₅ = H ou -CH₃
et p est un nombre entier variant de 1 à 6
- R₃ représente un atome d'hydrogène, un radical alkyle en C₁-C₁₀, un radical phényle ou un atome d'halogène
- a est égal à 0 ou 1
- b est égal à 0 ou 1
- n est égal à 1 ou 2
et **en ce que** le liant est une huile siccative choisie parmi les esters de glycérol et d'acide(s) gras, une gomme ou une résine naturelle choisie parmi damar, copal, gomme laque et colophane, un dérivé du caoutchouc choisi parmi le caoutchouc cyclisé et le caoutchouc chloré, un dérivé de la cellulose choisi parmi la nitrocellulose, l'acétate de cellulose, le proprionate de cellulose et l'acétobutyrate de cellulose, une résine vinylique choisie parmi polyacétate de vinyle, copolymère de chlorure de vinyle et copolymère de propionate de vinyle, une résine alkyde choisie parmi les esters de polyalcool et de diacide(s) phtalique(s), une résine acrylique choisie parmi le poly(méth)acrylate de méthyle et le poly(méth)acrylate d'éthyle, un polyester saturé ou insaturé, un polyepoxyde obtenu par réaction d'épichlorhydrine et de bisphénol A et/ou F, une résine polyuréthane mono-composant ou bi-composant, ou une résine modifiée silicone.

2. Composition selon la revendication 1, **caractérisée en ce que** ledit agent est la 2,4-pentanedione, la 2,4-hexanedione, la 3,5-heptanedione, la 2,4-octanedione, l'acétoacétamide, l'acide acétoacétique, le méthylacétoacétate, l'éthylacétoacétate, le n-propylacétoacétate, l'iso-propyl-acétoacétate, l'isobutylacétoacétate, le t-butylacétoacétate, le n-hexylacétoacétate, le malonamide, l'acide malonique, le diméthylmalonate, le diéthylmalonate, le di-n-propylmalonate, le di-iso-propylmalonate, le di-n-butyl-malonate, l'acide acétonedicarboxylique et le diméthylacétonedicarboxylate.

3. Composition selon la revendication 1 et 2, **caractérisée en ce que** ledit agent représente 0,05 à 35 % en poids de la matière sèche de la composition filmogène, de préférence de 1 à 20 %, et mieux encore de 4 à 10 %.

4. Composition selon l'une des revendications 1 à 3, **caractérisée en ce que** le milieu de dispersion est l'eau ou un solvant organique.

5. Utilisation d'une composition filmogène comprenant un milieu de dispersion, un liant, des pigments, des charges et des additifs, et un agent apte à piéger le formaldéhyde choisi parmi les composés à méthylène(s) actif(s), de formule (I) suivante : 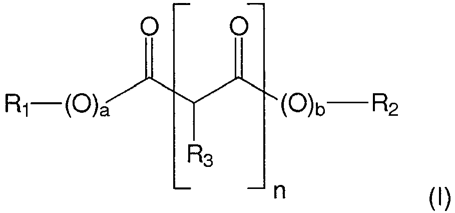 dans laquelle :
- R₁ et R₂, identiques ou différents, représentent un atome d'hydrogène, un radical alkyle en C₁-C₂₀, de préférence C₁-C₆, un radical amino ou un radical de formule 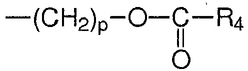 dans laquelle R₄ représente un radical 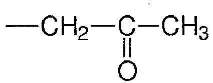 ou 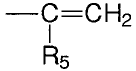 où R₅ = H ou -CH₃
et p est un nombre entier variant de 1 à 6
- R₃ représente un atome d'hydrogène, un radical alkyle en C₁-C₁₀, un radical phényle ou un atome d'halogène
- a est égal à 0 ou 1
- b est égal à 0 ou 1
- n est égal à 1 ou 2,
pour réduire la quantité de formaldéhyde dans l'air à l'intérieur d'un bâtiment, comprenant l'application de la composition filmogène sur une surface intérieure dudit bâtiment ou sur des revêtements muraux.

6. Procédé pour réduire la quantité de formaldéhyde dans l'air à l'intérieur d'un bâtiment, **caractérisé en ce qu'**il consiste à appliquer sur une toile à peindre constituée de fibres de verre une composition filmogène comprenant un milieu de dispersion, un liant, des pigments, des charges et des additifs, et un agent apte à piéger le formaldéhyde choisi parmi les composés à méthylène(s) actif(s), de formule (I) suivante : 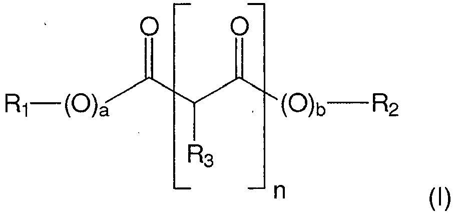 dans laquelle :
- R₁ et R₂, identiques ou différents, représentent un atome d'hydrogène, un radical alkyle en C₁-C₂₀, de préférence C₁-C₆, un radical amino ou un radical de formule 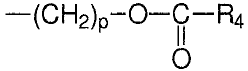 dans laquelle R₄ représente un radical 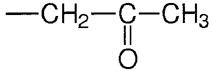 ou 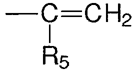 où R₅ = H ou -CH₃
et p est un nombre entier variant de 1 à 6
- R₃ représente un atome d'hydrogène, un radical alkyle en C₁-C₁₀, un radical phényle ou un atome d'halogène
- a est égal à 0 ou 1
- b est égal à 0 ou 1
- n est égal à 1 ou 2.

7. Procédé selon la revendication 6, **caractérisé en ce que** la composition filmogène est sous la forme d'une peinture en phase aqueuse et **en ce que** la toile à peindre contient un agent apte à réagir avec le formaldéhyde.

## Patentansprüche

1. Filmbildende Zusammensetzung, umfassend ein Dispersionsmedium, ein Bindemittel, Pigmente, Füllstoffe und Additive, **dadurch gekennzeichnet, dass** sie ein Mittel enthält, das in der Lage ist, Formaldehyd einzufangen, ausgewählt aus aktiven Methylenverbindungen folgender Formel (I): 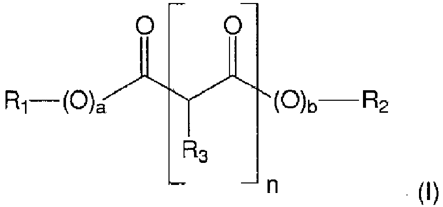 worin:
- R₁ und R₂, gleich oder verschieden, ein Wasserstoffatom, ein C₁-C₂₀-, vorzugsweise C₁-C₆, Alkylradikal, ein Aminoradikal oder ein Radikal der Formel 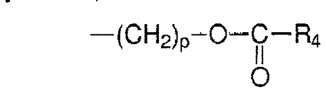 darstellen, worin R₄ ein Radikal 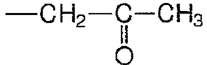 oder 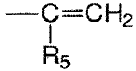 darstellt, worin R₅ = H oder -CH₃
und p eine ganze Zahl im Bereich von 1 bis 6 ist
- R₃ ein Wasserstoffatom, ein C₁-C₁₀-Alkylradikal, ein Phenylradikal oder ein Halogenatom darstellt
- a gleich 0 oder 1 ist
- b gleich 0 oder 1 ist
- n gleich 1 oder 2 ist
und dadurch, dass das Bindemittel ein trocknendes Öl, ausgewählt aus Estern von Glycerin und Fettsäure(n), ein Naturgummi oder -harz, ausgewählt aus Dammar, Kopal, Schellack und Kolophonium, ein Kautschukderivat, ausgewählt aus cyclisiertem Kautschuk und chloriertem Kautschuk, ein Cellulosederivat, ausgewählt aus Nitrocellulose, Celluloseacetat, Celluloseproprionat und Celluloseacetobutyrat, ein Vinylharz, ausgewählt aus Polyvinylacetat, Vinylchlorid-Copolymer und Vinylpropionat-Copolymer, ein Alkydharz, ausgewählt aus Estern von Polyalkohol und Phthaldisäure(n), ein Acrylharz, ausgewählt aus Polymethyl(meth)acrylat und Polyethyl(meth)acrylat, ein gesättigter oder ungesättigter Polyester, ein durch Reaktion von Epichlorhydrin und Bisphenol A und/oder F erhaltenes Polyepoxid, ein Einkomponenten- oder Zweikomponenten-Polyurethanharz oder ein modifiziertes Silikonharz ist.

2. Zusammensetzung nach Anspruch 1, **dadurch gekennzeichnet, dass** das Mittel 2,4-Pentandion, 2,4-Hexandion, 3,5-Heptandion, 2,4-Octandion, Acetoacetamid, Acetessigsäure, Methylacetoacetat, Ethylacetoacetat, n-Propylacetoacetat, Isopropylacetoacetat, Isobutylacetoacetat, t-Butylacetoacetat, n-Hexylacetoacetat, Malonamid, Malonsäure, Dimethylmalonat, Diethylmalonat, Di-n-propylmalonat, Di-iso-propylmalonat, Di-n-butylmalonat, Acetondicarbonsäure und Dimethylacetondicarboxylat ist.

3. Zusammensetzung nach Anspruch 1 und 2, **dadurch gekennzeichnet, dass** das Mittel 0,05 bis 35 Gew.-%, vorzugsweise 1 bis 20 Gew.-% und noch besser 4 bis 10 Gew.-% der Trockenmasse der filmbildenden Zusammensetzung ausmacht.

4. Zusammensetzung nach einem der Ansprüche 1 bis 3, **dadurch gekennzeichnet, dass** das Dispersionsmedium Wasser oder ein organisches Lösungsmittel ist.

5. Verwendung einer filmbildenden Zusammensetzung, umfassend ein Dispersionsmedium, ein Bindemittel, Pigmente, Füllstoffe und Additive und ein Mittel, das in der Lage ist, Formaldehyd einzufangen, ausgewählt aus aktiven Methylenverbindungen folgender Formel (I): 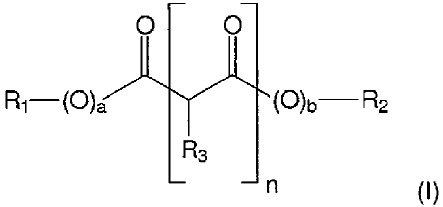 worin:
- R₁ und R₂, gleich oder verschieden, ein Wasserstoffatom, ein C₁-C₂₀-, vorzugsweise C₁-C₆-, Alkylradikal, ein Aminoradikal oder ein Radikal der Formel 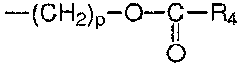 darstellen, worin R₄ ein Radikal 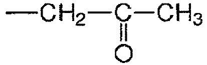 oder 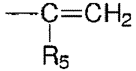 darstellt, worin R₅ = H oder -CH₃
und p eine ganze Zahl im Bereich von 1 bis 6 ist
- R₃ ein Wasserstoffatom, ein C₁-C₁₀-Alkylradikal, ein Phenylradikal oder ein Halogenatom darstellt
- a gleich 0 oder 1 ist
- b gleich 0 oder 1 ist
- n gleich 1 oder 2 ist,
zum Verringern der Formaldehydmenge in der Luft innerhalb eines Gebäudes, umfassend das Aufbringen der filmbildenden Zusammensetzung auf eine Innenfläche des Gebäudes oder auf Wandverkleidungen.

6. Verfahren zum Verringern der Formaldehydmenge in der Luft innerhalb eines Gebäudes, **dadurch gekennzeichnet, dass** es darin besteht, auf eine zu streichende Leinwand, gebildet aus Glasfasern, eine filmbildende Zusammensetzung aufzutragen, umfassend ein Dispersionsmedium, ein Bindemittel, Pigmente, Füllstoffe und Additive sowie ein Mittel, das in der Lage ist, Formaldehyd einzufangen, ausgewählt aus aktiven Methylenverbindungen nach folgender Formel (I): 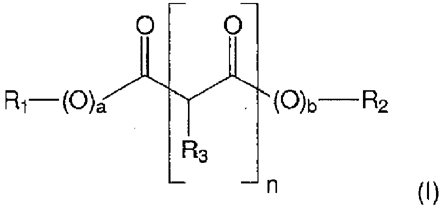 worin:
- R₁ und R₂, gleich oder verschieden, ein Wasserstoffatom, ein C₁-C₂₀-, vorzugsweise C₁-C₆-, Alkylradikal, ein Aminoradikal oder ein Radikal nach der Formel 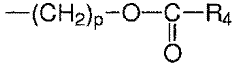 darstellen, worin R₄ ein Radikal 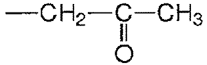 oder 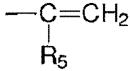 darstellt, worin R₅ = H oder -CH₃
und p eine ganze Zahl im Bereich von 1 bis 6 ist
- R₃ ein Wasserstoffatom, ein C₁-C₁₀-Alkylradikal, ein Phenylradikal oder ein Halogenatom darstellt
- a gleich 0 oder 1 ist
- b gleich 0 oder 1 ist
- n gleich 1 oder 2 ist.

7. Verfahren nach Anspruch 6, **dadurch gekennzeichnet, dass** die filmbildende Zusammensetzung in Form einer Anstrichfarbe in wässriger Phase vorliegt und dadurch, dass die zu streichende Leinwand ein Mittel enthält, das in der Lage ist, mit Formaldehyd zu reagieren.

## Claims

1. A film-forming composition comprising a dispersing medium, a binder, pigments, fillers and additives, **characterized in that** it includes an agent capable of trapping formaldehyde chosen from compounds comprising active methylene(s) of the following formula (I): 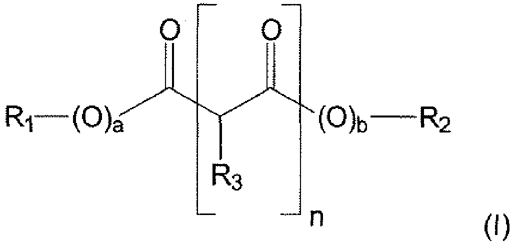 in which:
- R₁ and R₂, which are identical or different, represent a hydrogen atom, a C₁-C₂₀, preferably C₁-C₆, alkyl radical, an amino radical or a radical of formula 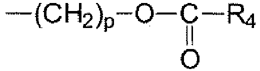 in which R₄ represents 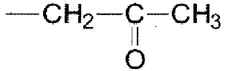 or 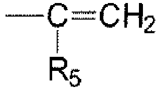 where R₅ = H or -CH₃,
and p is an integer varying from 1 to 6,
- R₃ represents a hydrogen atom, a C₁-C₁₀ alkyl radical, a phenyl radical or a halogen atom,
- a is 0 or 1,
- b is 0 or 1,
- n is 1 or 2
and **characterized in that** the binder is a siccative oil selected from esters of glycerol and of fatty acid(s), a natural gum or resin selected from dammar, copal, shellac or rosin, a rubber derivative selected from cyclized or chlorinated rubber, a cellulose derivative selected from nitrocellulose, cellulose acetate, cellulose propionate or cellulose acetatobutyrate, a vinyl resin selected from polyvinyl acetate, vinylchloride copolymer or vinylpropionate copolymer, an alkyd resin selected from ester of polyalcohol and of phthalic acid(s)), an acrylic resin selected from polymethyl(meth)acrylate or polyethyl (meth)acrylate, a saturated or unsaturated polyester, a polyepoxide obtained by reaction of epichlorohydrin and bisphenol A and/or F, a monocomponent or bicomponent polyurethane resin or a silicone-modified resin.

2. The composition as claimed in claim 1, **characterized in that** the said agent is 2,4-pentanedione, 2,4-hexanedione, 3,5-heptanedione, 2,4-octanedione, acetoacetamide, acetoacetic acid, methyl acetoacetate, ethylacetoacetate, n-propylacetoacetate, isopropylacetoacetate, isobutylacetoacetate, t-butyl acetoacetate, n-hexylacetoacetate, malonamide, malonic acid, dimethylmalonate, diethylmalonate, di(n-propyl) malonate, diisopropylmalonate, di(n-butyl)malonate, acetonedicarboxylic acid and dimethylacetonedicarboxylate.

3. The composition as claimed in claim 1 or 2, **characterized in that** said agent represents from 0.05 to 35% by weight of the dry matter of the film-forming composition, preferably from 1 to 20% and better still from 4 to 10%.

4. The composition as claimed in one of claims 1 to 3, **characterized in that** the dispersing medium is water or an organic solvent.

5. The use of the film-forming composition comprising a dispersing medium, a binder, pigments, fillers and additives, and an agent capable of trapping formaldehyde chosen from compounds comprising active methylene(s) of the following formula (I): 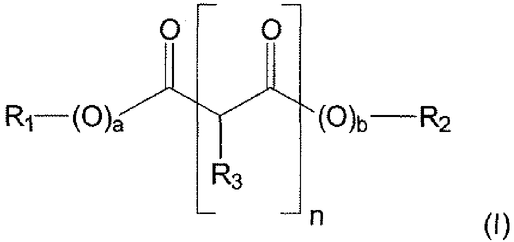 in which:
- R₁ and R₂, which are identical or different, represent a hydrogen atom, a C₁-C₂₀, preferably C₁-C₆, alkyl radical, an amino radical or a radical of formula 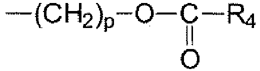 in which R₄ represents a 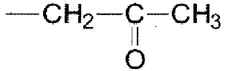 radical or 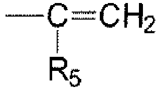 radical, where R₅ = H or -CH₃, and p is an integer varying from 1 to 6,
- R₃ represents a hydrogen atom, a C₁-C₁₀ alkyl radical, a phenyl radical or a halogen atom,
- a is 0 or 1,
- b is 0 or 1,
- n is 1 or 2
for reducing the amount of formaldehyde in the air inside a building, comprising applying the film-forming composition to an interior surface of the building or on wall coverings.

6. Process for reducing the quantity of formaldehyde in the air inside a building, **characterized in that** it consists in applying to a woven wallcovering consisting of glass fibers a film-forming composition comprising a dispersing medium, a binder, pigments, fillers and additives, and an agent capable of trapping formaldehyde chosen from compounds comprising active methylene (s) of the following formula (I): 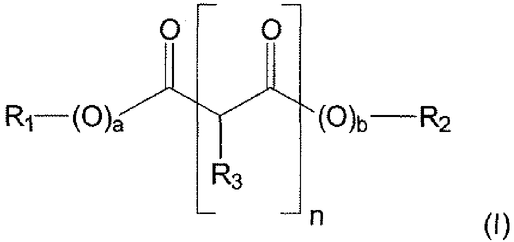 in which:
- R₁ and R₂, which are identical or different, represent a hydrogen atom, a C₁-C₂₀, preferably C₁-C₆, alkyl radical, an amino radical or a radical of formula 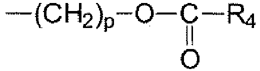 in which R₄ represents a 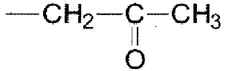 radical or 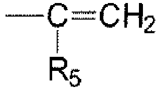 radical, where R₅ = H or -CH₃, and p is an integer varying from 1 to 6,
- R₃ represents a hydrogen atom, a C₁-C₁₀ alkyl radical, a phenyl radical or a halogen atom,
- a is 0 or 1,
- b is 0 or 1,
- n is 1 or 2.

7. Process according to claim 6, **characterized in that** the film-forming composition is in the form of an aqueous-phase paint and **in that** the woven wallcovering contains an agent capable of reacting with formaldehyde.
